# EUROPÄISCHE PATENTSCHRIFT

(11) **EP 2 921 434 B1**
(45) Veröffentlichungstag und Bekanntmachung des Hinweises auf die Patenterteilung: **04.10.2017**
(21) Anmeldenummer: 15159711.9
(22) Anmeldetag: 18.03.2015
(51) Int. Cl.: B65G 19/02, B65G 9/00

(54) **EINTAKTVORRICHTUNG FÜR GRAVITATIONSFÖRDERER**
SYNCHRONISATION DEVICE FOR GRAVITY CONVEYORS
DISPOSITIF À SIMPLE ALTERNANCE POUR CONVOYEUR À GRAVITÉ

(30) Priorität: 20.03.2014 CH 4292014
(43) Veröffentlichungstag der Anmeldung: 23.09.2015
(73) Patentinhaber: Ferag AG, 8340 Hinwil (CH)
(72) Erfinder: Fenile, Roberto, 8623 Wetzikon (CH); Guhl, Simon, 8620 Wetzikon (CH)
(74) Vertreter: Frei Patent Attorneys

(56) Entgegenhaltungen:
- EP-B1- 1 299 298
- DE-A1-102010 045 725
- US-A- 1 912 647

## Beschreibung

Die Erfindung bezieht sich auf das Gebiet von Gravitationsförderern. Sie bezieht sich auf Gravitationsförderer gemäss dem Oberbegriff des Patentanspruches 1. Zudem bezieht sich die Erfindung auch auf einen Gravitationsförderer umfassend eine Eintaktvorrichtung und ein Verfahren zum Eintakten von Einzelwagen eines Gravitationsförderers in ein getaktet förderndes Fördermittel des Gravitationsförderers.

Mit Gravitationsförderer ist ein Förderer bezeichnet, welcher Gegenstände hauptsächlich durch Schwerkraft fördert. Der Gravitationsförderer kann dabei Einzelwagen aufweisen, welche sich frei von Verbindungen untereinander auf dem Gravitationsförderer bewegen und Gegenstände fördern. Einzelwagen des Gravitationsförderers sind somit hauptsächlich durch Gravitation (also Schwerkraft) angetrieben. Die Einzelwagen sind derart ausgebildet, dass sie dazu fähig sind, Gegenstände zu fördern. Ein von einem Einzelwagen geförderter Gegenstand kann als Fördereinheit verstanden werden, welche sich aus einem einzelnen Gegenstand oder aus mehreren einzelnen Gegenständen zusammensetzt. Der Begriff "Gegenstand" umfasst in Zusammenhang mit dem Fördern durch Einzelwagen das gesamte von einem Einzelwagen geförderte Gut.

Auf Teilstrecken kann beim Gravitationsförderer ein Fördermittel die Einzelwagen fördern. Dabei kann das Fördermittel die Einzelwagen in eine Richtung mit einer Komponente entgegen der Gravitationsrichtung bewegen. Oder das Fördermittel kann die Einzelwagen in eine Richtung mit einer Komponente in Gravitationsrichtung bewegen. Oder das Fördermittel kann die Einzelwagen in eine Richtung ohne Komponente in oder entgegen der Gravitationsrichtung bewegen (also horizontal).

Das Fördermittel kann die Einzelwagen beispielsweise in eine sich ändernde Richtung fördern. Dabei können optional verschieden grosse Komponenten der Richtung in und/oder entgegen der Gravitationsrichtung umfasst werden oder nicht.

Das Fördermittel kann die Einzelwagen optional mindestens teilweise entgegen der Gravitationsrichtung fördern. Dies kann beispielsweise dazu dienen, die Einzelwagen in eine bestimmte Höhe (also eine bestimmte Distanz zum Boden, gemessen in Gravitationsrichtung) zu transportieren, wobei diese Höhe für ein Fördern durch Gravitation benutzt werden kann und/oder für eine bestimmte räumliche Position der Einzelwagen für beispielsweise eine Übergabe der geförderten Gegenstände sorgen kann. Das Fördermittel greift dabei insbesondere mindestens teilweise von unten an den Einzelwagen an. Mit "von unten" angreifend ist in Richtung entgegen der Gravitationsrichtung angreifend gemeint. Somit kann der Einzelwagen auf dem Fördermittel aufliegen und durch das Fördermittel bewegt und angetrieben werden. Das Fördermittel kann die Einzelwagen optional mindestens teilweise in Gravitationsrichtung fördern. Dies kann beispielsweise dazu dienen, die Einzelwagen zu takten, obwohl diese in Gravitationsrichtung durch die Gravitation angetrieben mit einer höheren Geschwindigkeit bewegen könnten. Auf diese Weise kann kontrolliert werden, wie viele Einzelwagen sich zu welcher Zeit und mit welcher Geschwindigkeit durch einen bestimmten Abschnitt des Gravitationsförderers bewegen. Das Fördermittel greift dabei insbesondere mindestens teilweise von unten an den Einzelwagen an. Somit kann der Einzelwagen auf dem Fördermittel aufliegen und durch das Fördermittel gebremst werden.

Einzelwagen des Gravitationsförderers können dabei beispielsweise durch Eintaktvorrichtungen an Fördermittel übergeben werden, welche die Einzelwagen zum Beispiel getaktet fördern.

Eine derartige Eintaktvorrichtung ist beispielsweise aus EP 1 299 298 B1 bekannt, die den Oberbegriff des Anspruchs 1 offenbart. Dort sind Pufferspeicher beschrieben, deren Haltelemente (bzw. Einzelwagen) nicht einzeln, sondern in Gruppen aus dem Pufferspeicher entlassen und an einen Wegförderantrieb (bzw. ein Fördermittel) übergeben werden. Dazu sind Mittel zum Bilden von Halteelement-Gruppen im Pufferspeicher und Mittel zum Entlassen von Halteelement-Gruppen aus dem Pufferspeicher beschrieben, welche als ein oder auch zwei Vorrichtungsteile ausgebildet sein können. In EP 1 299 298 B1 sind diese Mittel sowohl als Takträder als auch als voneinander getrennt ausgebildete und getrennt steuerbare Vorrichtungsteile offenbart. In US 1 912 647 A sind elastische oder abfedernde Platten beschrieben, welche in einer Kurve eines Einzelwagenförderers verhindern, dass sich an Einzelwagen hängende, benachbarte Artikel berühren.

Die im Stand der Technik offenbarten Entlassungsmittel wie Takträder oder Vorrichtungsteile weisen den Nachteil auf, dass die Einzelwagen beim Auflaufen auf das Entlassungsmittel oder auf ein Ende des Pufferspeichers ihren Impuls schlagartig an das Entlassungsmittel oder das Ende des Pufferspeichers überträgt. Die Einzelwagen werden also ruckartig abgebremst. Ein derartiges abruptes Abbremsen kann von Nachteil sein für die Einzelwagen, für damit geförderte Gegenstände, für einen Befestigungsmechanismus der geförderten Gegenstände am Einzelwagen, für das Entlassungsmittel und/oder für damit verbundene Vorrichtungsteile der Eintaktvorrichtung bzw. des Gravitationsförderers.

Die schlagartige Impulsübertragung kann beispielsweise zu Materialermüdung führen. Auch ein hoher Verschleiss kann daraus resultieren. Es kann auch eine hohe Geräuschentwicklung verursacht werden. Die geförderten Gegenstände in den Einzelwagen können beschädigt werden. Die geförderten Gegenstände können deplaziert werden - relativ zu den Einzelwagen und/oder relativ zueinander im Fall von Gegenständen mit mehreren Einzelteilen. Insbesondere kann auch das Fördermittel (und dabei insbesondere dessen Mitnahmevorrichtungen für die Einzelwagen und/oder dessen Antrieb) beschädigt, in Mitleidenschaft gezogen und/oder abgenutzt werden.

Es ist deshalb Aufgabe der Erfindung, einen Gravitationsförderer mit einer Eintaktvorrichtung der eingangs genannten Art zu schaffen, welche mindestens einen der oben genannten Nachteile mindestens teilweise behebt.

Diese Aufgabe löst ein Gravitationsförderer mit den Merkmalen des Patentanspruches 1.

In dem erfindungsgemässen Gravitationsförderer umfassend ein Fördermittel und eine Eintaktvorrichtung zu einer Übergabe von Einzelwagen eines Gravitationsförderers an das getaktet fördernde Fördermittel des Gravitationsförderers ist die Eintaktvorrichtung derart ausgebildet, dass die Einzelwagen einem Takt des Fördermittels zugeordnet werden können. Die Eintaktvorrichtung weist dabei einen Dämpfungsmechanismus auf, welcher einen auf die Eintaktvorrichtung wirkenden Impuls eines Einzelwagens schonend abschwächt. Zudem weist die Eintaktvorrichtung einen Antriebsmechanismus auf, und der Antriebsmechanismus ist durch das Fördermittel angetrieben.

Die Übergabe der Einzelwagen durch die Eintaktvorrichtung an das getaktet fördernde Fördermittel erfolgt zwischen einem Bereich einer Bewegungsbahn des Gravitationsförderers mit freier Bewegung der Einzelwagen und einem Bereich einer Bewegungsbahn des Gravitationsförderers mit Förderung der Einzelwagen durch das getaktet fördernde Fördermittel.

Der Einzelwagen wirkt einen Impuls auf die Eintaktvorrichtung aus, falls sich der Einzelwagen ausserhalb eines ihm zugeordneten Takts des Fördermittels befindet. Ausserhalb des ihm zugeordneten Takts des Fördermittels kann sich der Einzelwagen beispielsweise befinden, wenn er unpassende Raum-Zeitkoordinaten und/oder einen unpassenden Impuls aufweist. Als Folge davon ist es dem Einzelwagen nicht möglich, bei einem Zusammentreffen mit dem Fördermittel auf Anhieb einen ihm zugeordneten Takt des Fördermittels einzunehmen, wenn keine Eintaktvorrichtung vorhanden ist. In einem Fall, in welchem der Einzelwagen sich bereits in dem ihm zugeordneten Takt des Fördermittels befindet, kann der Einzelwagen auch ohne einen Impuls auf die Eintaktvorrichtung auszuwirken durch die Eintaktvorrichtung durchlaufen. Ein solcher Durchlauf kann somit ohne auf die Eintaktvorrichtung wirkenden Impuls erfolgen, wodurch der Impuls des Einzelwagens also auch nicht abgeschwächt wird.

Die Einzelwagen können durch die Eintaktvorrichtung vor der Übergabe an das Fördermittel auf schonende Weise von überschüssiger kinetischer Energie befreit werden. Dazu kann der Impuls des Einzelwagens durch die Eintaktvorrichtung mindestens teilweise aufgenommen werden, wobei dies schonend erfolgt. Auf diese Weise wird der Impuls des Einzelwagens also schonend abgeschwächt. Beispielsweise kann der von der Eintaktvorrichtung aufgenommene Impuls von dieser dissipiert werden. Mit dissipieren ist eine Dissipation im physikalischen Sinn gemeint, also eine Umwandlung von Bewegungsenergie in thermische Energie. Beispielsweise kann dabei ein Teil der Eintaktvorrichtung elastisch bzw. nachgiebig ausgebildet sein, um ein schonendes Abschwächen des Impulses zu bewirken.

Ein schonendes Abschwächen bezeichnet ein sanftes Abschwächen. Mit anderen Worten verläuft das Abschwächen sacht bzw. vorsichtig. Ein auf die Eintaktvorrichtung wirkenden Impuls des Einzelwagens wird dabei zeitlich gedehnt, mit anderen Worten auf eine Zeitspanne verteilt. Spitzenwerte von Krafteinwirkungen auf die am Impulsübertrag beteiligten Elemente können somit vermieden werden. Das schonende Abschwächen ist ein Gegenteil zu einem scharfen, abrupten, ruckartigen bzw. schlagartigen Abschwächen, bei welchem der Einzelwagen in kurzer Zeit und mit einem hohen Spitzenwert an Impulsübertragung pro Zeit verlangsamt wird. Beispielsweise kann durch das schonende Abschwächen ein Abprallen von Einzelwagen an der Eintaktvorrichtung und/oder an anderen Einzelwagen reduziert oder vermieden werden.

Insbesondere kann als schonendes Abschwächen verstanden werden, dass ein Impuls über einen Zeitraum von mindestens 0.05 Sekunden gedehnt abgeschwächt wird. Insbesondere kann dieser Zeitraum auch mindestens 0.1 Sekunden betragen. Insbesondere beträgt dieser Zeitraum auch mindestens 0.4 Sekunden.

Das schonende Abschwächen kann materialschonend für die Einzelwagen, für die damit geförderten Gegenstände, für die Eintaktvorrichtung, für den Gravitationsförderer und/oder für das getaktet fördernde Fördermittel sein. Das schonende Abschwächen vermindert somit Materialermüdung an den genannten Vorrichtungsteilen. Der Verschleiss von genannten Teilen kann durch schonendes Abschwächen reduziert werden. Beschädigungen von den genannten Teilen können reduziert oder verhindert werden. Die von den Einzelwagen geförderten Gegenstände können weniger stark oder gar nicht deplaziert werden (relativ zu den Einzelwagen und/oder relativ zueinander im Fall von Gegenständen mit mehreren Einzelteilen).

Das schonende Abschwächen kann insbesondere ein Auflaufen von neuen Einzelwagen auf einen Pufferspeicher materialschonend und sanft ausgestalten, indem der Impuls des neuen hintersten Einzelwagens durch den Pufferspeicher an den vordersten Einzelwagen weitergegeben wird, welcher mit der Eintaktvorrichtung in Kontaktschluss steht, und wodurch dessen Impuls schonend abgeschwächt wird. Auch das Fördermittel bzw. dessen Mitnahmevorrichtungen für die Einzelwagen und insbesondere der Antrieb des Fördermittels werden durch schonendes Abschwächen geschont, indem kein unerwünschter überschüssiger und/oder ausserhalb des Takts einwirkender Impuls darauf einwirkt. Zudem kann das schonende Abschwächen des Impulses eine geringere Lautstärke des Eintaktens bewirken.

Also optionales Beispiel weist die Eintaktvorrichtung ein Entlassungsmittel auf, welches durch Kontaktschluss mit den Einzelwagen die Einzelwagen in das Fördermittel eintaktet, wobei der Dämpfungsmechanismus am Entlassungsmittel ausgebildet ist.

Das Entlassungsmittel kann mit dem Einzelwagen Kontaktschluss herstellen, durch welchen der Impuls eines sich in Richtung der Eintaktvorrichtung bewegenden Einzelwagens auf das Entlassungsmittel und somit auf die Eintaktvorrichtung wirkt. Dieser Kontaktschluss und der am Entlassungsmittel ausgebildete Dämpfungsmechanismus schwächen den auf das Entlassungsmittel wirkenden Impuls schonend ab.

Dass der Einzelwagen in das Fördermittel eingetaktet wird, bedeutet mit anderen Worten, dass in Bewegungsrichtung der Einzelwagen stromabwärts vom Eintakter die Einzelwagen getaktet sind und somit einzelnen Takten des getaktet fördernden Fördermittels zugeordnet sind. In Bewegungsrichtung der Einzelwagen stromaufwärts vom Eintakter können die Einzelwagen hingegen ungetaktet sein, müssen es aber nicht.

Eine Eintaktvorrichtung mit Entlassungsmittel kann mechanisch einfach und stabil ausgebildet werden. Durch den Dämpfungsmechanismus am Entlassungsmittel kann die Eintaktvorrichtung kompakt ausgebildet sein. Das Entlassungsmittel kann Verschleissteile umfassen und sich für rasche und einfache Reparatur, Wartung und Ersatz eignen. Der Kontaktschluss mit dem Entlassungsmittel erlaubt eine effiziente und kostengünstige Weise eines Impulsübertrags.

Der Dämpfungsmechanismus der Eintaktvorrichtung kann einen Arm umfassen, welcher mindestens in einem Teilbereich elastisch ausgebildet ist.

Der Dämpfungsmechanismus kann einen Arm umfassen. Dabei ist mindestens ein Teilbereich des Arms elastisch, oder der ganze Arm ist elastisch. Insbesondere weist der Arm Formelastizität auf. Arme, welche elastisch sind oder elastische Bereich umfassen, sind kostengünstig, robust und langlebig. Solche Arme können einen Teil der aufgenommenen Energie dissipieren. Elastische Arme oder Arme mit elastischen Teilbereichen können derart ausgebildet sein, dass sie einen von Einzelwagen darauf wirkenden Impuls schonend abschwächen können, indem durch die Elastizität der Impulsübertrag zeitlich gedehnt wird. Das schonende Abschwächen ist mit den entsprechenden und weiter oben beschriebenen Vorteilen verbunden.

Insbesondere kann der Dämpfungsmechanismus einen Arm umfassen, welcher mindestens einen Teilbereich aus Federstahlblech aufweist. Dabei ist das Federstahlblech derart ausgebildet, dass der Arm durch einen vom Einzelwagen auf den Arm und somit auf das Entlassungsmittel wirkenden Impuls elastisch verformt wird. Auch für diesen Fall gelten die im obigen Absatz beschriebenen Vorteile. Darüber hinaus sind Teilbereiche aus Federstahlblech und damit die Arme kostengünstig und einfach herstellbar. Es kann auch der ganze Arm aus Federstahlblech ausgebildet sein.

Die Arme können auch ohne elastische Bereiche ausgebildet sein. Der Dämpfungsmechanismus kann auch ohne Arme ausgebildet sein.

Als weiteres Merkmal kann der Dämpfungsmechanismus eine elastische Kontaktzone für einen Kontaktschluss mit den Einzelwagen umfassen.

Die elastische Kontaktzone kann beispielsweise als Kontaktfläche, als Kontaktpunkt oder als Kontaktlinie ausgebildet sein. Die elastische Kontaktzone kann den auf die Eintaktvorrichtung wirkenden Impuls schonend abschwächen, indem durch die Elastizität der Impulsübertrag zeitlich gedehnt wird. Die elastische Kontaktzone kann beispielsweise als Beschichtung ausgebildet sein oder als kissenartiger Belag. Die elastische Kontaktzone kann beispielsweise auch Energie dissipieren. Die elastische Kontaktzone kann austauschbar ausgestaltet sein, um günstige, einfache und rasche Reparatur oder Ersatz zu ermöglichen.

Insbesondere kann die elastische Kontaktzone als Teil eines O-rings ausgebildet sein. Dabei kann ein O-Ring einfach und rasch an einem Teil des Dämpfungsmechanismus befestigt und ausgetauscht werden. O-Ringe in vielen verschiedenen Ausführungsformen (variierend beispielsweise in Form, Dicke und/oder Material) können kostengünstig hergestellt werden. Beispielsweise kann ein O-Ring in einer ringförmigen Nut positioniert sein, welche eine Stirnseite einer Buchse umläuft, wobei die Buchse an einem Ende eines elastischen Bereichs eines Armes eines Entlassungsmittels angeordnet ist. Eine Buchse ist ein Hohlzylinder, insbesondere mit kreisrundem Querschnitt.

Alternativ kann der Dämpfungsmechanismus auch ohne elastische Kontaktzone ausgebildet sein.

Als optionales Merkmal kann die Eintaktvorrichtung eine Achse aufweisen, um welche das Entlassungsmittel drehbar gelagert ist. Dabei ist die Achse insbesondere durch einen Massenmittelpunkt des Entlassungsmittels verlaufend angeordnet.

Über eine Achse lässt sich das Entlassungsmittel einfach und effizient steuern, regeln und/oder antreiben. Verläuft die Achse durch einen Massenmittelpunkt des Entlassungsmittels, kann das Entlassungsmittel gleichmässig und mit geringer Antriebsenergie um die Achse gedreht werden.

Gemäss einer Weiterbildung der Erfindung enthält das Entlassungsmittel einen Grundkörper, an welchem mindestens ein Arm und insbesondere eine Mehrzahl von Armen angeordnet sind. Der Grundkörper kann insbesondere um die oben genannte Achse drehbar gelagert sein. Die Arme sind insbesondere um die Achse verteilt am Grundkörper angeordnet.

Der Dämpfungsmechanismus wird insbesondere am Grundkörper ausgebildet. So kann der Grundkörper mindestens einen elastisch verformbaren Bereich enthalten oder elastisch verformbar ausgebildet sein. Die elastische Verformbarkeit kann durch den Werkstoff und/oder durch die Konstruktion erreicht werden. So kann der Dämpfungsmechanismus am Grundkörper aus einem elastischen Material bestehen oder dieses enthalten. Der Dämpfungsmechanismus am Grundkörper kann mindestens ein Federelement, wie Spiralfeder, enthalten oder aus einem solchen bestehen.

Der Grundkörper kann elastisch, insbesondere federelastisch gelagert sein. Der Grundkörper ist über die elastische Lagerung insbesondere drehbar an einer Drehachse gelagert.

Gemäss dieser Weiterbildung wird eine auf einen Arm einwirkende Kraft auf den Grundkörper übertragen. Der Grundkörper bzw. die elastische Lagerung wird durch die Krafteinwirkung elastisch deformiert, derart dass der betreffende Arm ausgelenkt wird und so der Krafteinwirkung ausweichen kann.

Der mindestens eine Arm kann insbesondere starr ausgebildet sein. Die oben beschriebene Weiterbildung erlaubt nämlich eine robuste Ausgestaltung des mindestens einen Armes, da dieser nicht elastisch verformbar sein muss. Dadurch ist der Verschleiss des Arms im Vergleich zu einem elastisch verformbaren Arm wesentlich geringer.

Optional kann das Entlassungsmittel eine radförmige Form aufweisen.

Insbesondere kann das Entlassungsmittel in Form eines Schaufelrads ausgebildet sein, wobei die Schaufeln bzw. die Arme den Dämpfungsmechanismus umfassen.

Eine radförmige Form hat den Vorteil einer einfachen Konstruktion. Zudem lässt sich ein radförmiges Entlassungsmittel über eine Radachse einfach und effizient steuern, regeln und/oder antreiben. Das Entlassungsmittel kann aber auch in einer Form ausgebildet sein, welche von einem Rad abweicht. Beispielsweise kann das Entlassungsmittel kugelförmig, ringförmig, quaderförmig oder als Rotationsellipsoid ausgebildet sein.

Als weiteres optionales Merkmal kann die Eintaktvorrichtung ein Vereinzelungsmittel umfassen, welches eine Vereinzelung der Einzelwagen beim Eintakten in das Fördermittel bewirkt.

Ein Vereinzelungsmittel erlaubt eine zuverlässige und effiziente Vereinzelung der Einzelwagen. Vereinzelung bedeutet, dass aufeinander folgende Einzelwagen separat voneinander aus der Eintaktvorrichtung entlassen werden. Auf diese Weise kann beispielsweise sichergestellt werden, dass jeweils maximal ein Einzelwagen einem Takt des getaktet fördernden Fördermittels zugeordnet wird. Die Eintaktvorrichtung kann aber auch ohne Vereinzelungsmittel ausgebildet sein.

Insbesondere kann das Vereinzelungsmittel das Entlassungsmittel umfassen.

Das Entlassungsmittel und seine verschiedenen, oben beschriebenen Ausführungsformen können dabei zur Vereinzelung von Einzelwagen und somit als Vereinzelungsmittel verwendet werden. Das Entlassungsmittel als Vereinzelungsmittel zu verwenden vereinfacht die Eintaktvorrichtung und erlaubt eine kompakte Bauweise.

Alternativ kann das Vereinzelungsmittel aber auch getrennt vom Entlassungsmittel ausgebildet sein.

Ein weiterer Aspekt der Erfindung ist ein Gravitationsförderer, welcher eine Eintaktvorrichtung wie oben beschrieben umfasst und ein Fördermittel umfasst, wobei die Eintaktvorrichtung einen Antriebsmechanismus aufweist.

Mit Antriebsmechanismus wird eine Mechanik bezeichnet, welche einen Antrieb der Eintaktvorrichtung ermöglicht. Dies erlaubt einen vielseitigen und flexiblen Einsatz der Eintaktvorrichtung.

Der Antriebsmechanismus kann einen elektrischen Antrieb enthalten.

Der Antriebsmechanismus, insbesondere der elektrische Antrieb, kann mittels einer Steuerungseinrichtung gesteuert werden.

Im Gravitationsförderer ist der Antriebsmechanismus durch das Fördermittel angetrieben.

Die Eintaktvorrichtung wird durch einen durch das Fördermittel angetriebenen Antriebsmechanismus angetrieben. Damit kann auf einen separaten Antrieb für die Eintaktvorrichtung verzichtet werden, was kostengünstig und raumsparend ist.

Alternativ kann die Eintaktvorrichtung einen eigenen Antrieb und einen Antriebsmechanismus umfassen. Oder der Antriebsmechanismus kann in einer nicht beanspruchten Ausführungsform durch einen Antrieb angetrieben werden, welcher vom Fördermittel unabhängig ist.

Insbesondere kann der Antriebsmechanismus der Eintaktvorrichtung das Entlassungsmittel antriebstechnisch starr an das Fördermittel koppeln.

Mit starrem Koppeln wird dabei ein Koppeln mit einem fixen Übersetzungsverhältnis bezeichnet, oder mit anderen Worten eine Zwangskopplung. Somit sind das Fördermittel und der Antriebsmechanismus des Entlassungsmittels starr miteinander verbunden, wodurch auch die Eintaktvorrichtung starr mit dem Fördermittel verbunden bzw. starr daran gekoppelt ist.

Bei einem starren Koppeln der Eintaktvorrichtung an das Entlassungsmittel kann die Eintaktvorrichtung einfach und kompakt ausgebildet werden und gleichzeitig auf eine robuste und simple Weise sowohl angetrieben als auch gesteuert werden. Die Eintaktvorrichtung kann somit kostengünstig und raumsparend gebaut werden. Die Eintaktvorrichtung ist robust und langlebig. Wartung, Reparatur und Unterhalt einer solchen Eintaktvorrichtung sind einfach, rasch und kostengünstig durchführbar.

Als Alternative kann der Antriebsmechanismus der Eintaktvorrichtung auch durch eine variable Kopplung mit dem Fördermittel verbunden sein, beispielsweise durch eine Kupplung, insbesondere eine schaltbare Kupplung, und/oder einen Freilauf.

Der Antriebsmechanismus der Eintaktvorrichtung kann insbesondere ein Fördermittelrad für einen kraftschlüssigen Kontakt mit dem Fördermittel, einen Zahnriemen zum Antreiben der Eintaktvorrichtung und eine starre Übersetzung zwischen Fördermittelrad und Zahnriemen umfassen. Durch das Fördermittelrad kann eine Bewegung des Fördermittels übergenommen und auf die Eintaktvorrichtung übertragen werden. Die Eintaktvorrichtung wird also durch das Fördermittel angetrieben und ist starr daran gekoppelt. Diese Ausführungsform eines Antriebsmechanismus ist einfach, robust und verschleissfest. Zudem kann ein derartiger Antriebsmechanismus kostengünstig und kompakt ausgebildet werden.

Optional ist in einem Gravitationsförderer die Eintaktvorrichtung derart ausgebildet und positioniert, dass eine Entlassungsposition relativ zur Gravitationsrichtung oberhalb einer Übergabestelle an das Fördermittel angeordnet ist. Dabei wird als Entlassungsposition eine räumliche Position der Einzelwagen bezeichnet, in welcher der letzte mögliche Kontaktschluss zwischen Einzelwagen und Eintaktvorrichtung erfolgen kann, wenn der Einzelwagen die Eintaktvorrichtung in Bewegungsrichtung der Einzelwagen passiert.

Die Übergabestelle bezeichnet dabei eine räumliche Position der Einzelwagen, in welcher ein Einzelwagen vom getaktet fördernden Fördermittel übernommen werden kann. Mit anderen Worten kann der Einzelwagen an der Übergabestellte vom getaktet fördernden Fördermittel mitgenommen und gefördert werden.

Wenn die Übergabestelle der Einzelwagen an das Fördermittel in Gravitationsrichtung unter der Entlassungsposition angeordnet ist, dann kann der Einzelwagen nach einem Passieren der Entlassungsposition durch Gravitation angetrieben zur Übergabestelle gefördert werden. Die bietet beispielsweise den Vorteil, dass der Einzelwagen mit der Eintaktvorrichtung und mit dem Fördermittel zeitlich und räumlich getrennt in Kontaktschluss tritt. Ein Einzelwagen kann somit nicht gleichzeitig mit der Eintaktvorrichtung und dem Fördennittel in Kontaktschluss stehen, wodurch ein gegenseitiges Ein- oder Verklemmen vermieden wird. Als weiterer Vorteil kann der Einzelwagen in einer Distanz zwischen Entlassungsposition und Übergabestelle durch Gravitation auf eine Geschwindigkeit beschleunigt werden, welche einen Kontaktschluss des Einzelwagens mit dem Fördermittel mit geringer Impulsübertragung auf das Fördermittel erlaubt.

Alternativ können Übergabestelle und Entlassungsposition aber auch mindestens teilweise überlappen.

Optional umfasst ein Gravitationsförderer eine Eintaktvorrichtung wie oben beschrieben und ein Fördermittel, wobei das Fördermittel eine Kette mit Mitnehmern umfasst.

Eine Kette mit Mitnehmern ist eine kostengünstige und robuste Ausführungsform eines Fördermittels, welches sich für ein getaktetes fördern eignet. Sind die Mitnehmer starr in gleichmässigen Abstand an die Kette gekoppelt, erlaubt eine gleichmässige Zugbewegung der Kette ein getaktetes fördern, da Kettenglieder einer Kette unter Zugbelastung ihren jeweiligen Abstand beibehalten.

Der Gravitationsförderer kann aber auch andere Fördermittel als eine Kette mit Mitnehmern umfassen, welche als getaktet förderndes Fördermittel für die Einzelwagen verwendet werden. Beispielsweise können Förderbänder, Seile (Drahtseile, Kunststofffaserseile oder andere) oder Platten- bzw. Schuppenförderer verwendet werden, jeweils mit oder ohne Mitnehmer.

Insbesondere kann der Gravitationsförderer einen Sensor für Einzelwagen und einen Sensor für das Fördermittel umfassen.

Die Sensoren können als optische, induktive, mechanische und/oder magnetische Sensoren ausgebildet sein.

Durch diese Sensoren ist der Gravitationsförderer dazu befähigt, eine Fördermenge des Fördermittels und/oder des Gravitationsförderers zu erfassen. Beispielsweise können damit vom Fördermittel getaktet geförderte Gegenstände und/oder Einzelwagen gezählt werden.

Der Sensor für Einzelwagen kann beispielsweise erfassen, ob ein Einzelwagen von der Eintaktvorrichtung in das Fördermittel eingetaktet wird. Somit kann festgestellt werden, ob einem bestimmten Takt ein Einzelwagen zugeordnet ist. Es kann festgestellt werden, ob einem Takt ein Einzelwagen zugeordnet ist und/oder ob zwischen den Takten mit Einzelwagen Lücken bestehen. Eine Lücke besteht, wenn sich zwischen Takten mit Einzelwagen Takte ohne Einzelwagen befinden. Der Sensor für das Fördermittel kann beispielsweise erfassen, ob das Fördermittel bewegt wird, mit welcher Geschwindigkeit das Fördermittel bewegt wird und/oder ein welchem Takt sich das Fördermittels an einer bestimmten Stelle befindet.

In Kombination dieser beiden Sensoren kann der Gravitationsförderer messen und/oder zählen, wie viele Einzelwagen sich im Fördermittel befinden, in welchem Takt des Fördermittels sich Einzelwagen (einzeln oder in welcher Anzahl) befinden und/oder an welcher Stelle sich ein bestimmter Takt des Fördermittels zu einem bestimmtem Zeitpunkt befindet. Eine solche Anordnung kann also als Zählvorrichtung verwendet werden. Diese Anordnung kann Daten zur Auslastung und Fördermenge des Gravitationsförderers, des Fördermittels und/oder der Einzelwagen liefern.

Alternativ kann der Gravitationsförderer auch nur einen oder mehrere Sensoren für das Fördermittel umfassen. Der Gravitationsförderer kann auch nur einen oder mehrere Sensoren für Einzelwagen umfassen. Der Gravitationsförderer kann Sensoren für das Fördermittel und für Einzelwagen an verschiedenen Stellen des Gravitationsförderers umfassen - zusätzlich oder alternativ zu Sensoren für das Fördermittel und/oder Einzelwagen.

Der Gravitationsförderer kann auch ohne Sensoren ausgebildet sein.

Als optionales Merkmal des Gravitationsförderers kann die Eintaktvorrichtung - bei einem auf die Eintaktvorrichtung wirkenden Impuls - an einem Einzelwagen des Gravitationsförderers an einer ersten Kontaktstelle des Einzelwagens angreifen, und das Fördermittel an einer zweiten von der ersten verschiedenen Kontaktstelle des Einzelwagens angreifen.

Mit anderen Worten greifen die Eintaktvorrichtung und das Fördermittel an verschiedenen Kontaktstellen des Einzelwagens an. Insbesondere greifen die Eintaktvorrichtung und das Fördermittel ausschliesslich an verschiedenen Kontaktstellen des Einzelwagens an.

Beispielsweise kann dies auf verschiedenen und insbesondere einander entgegen gesetzten Seiten des Einzelwagens erfolgen.

Beispielsweise greift die Eintaktvorrichtung in Bewegungsrichtung der Einzelwagen betrachtet auf einer rechten Seite des Einzelwagens an, und das Fördermittel greift in Bewegungsrichtung der Einzelwagen betrachtet auf einer linken Seite des Einzelwagens an (wobei die Gravitationsrichtung nach unten zeigt).

Durch ein solches Angreifen am Einzelwagens an verschiedenen Kontaktstellen können die Eintaktvorrichtung und das Fördermittel ohne Kollisionsgefahr miteinander betrieben werden und die Eintaktvorrichtung mit einem Teil des Fördermittels dennoch räumlich kompakt ausgebildet werden.

Andererseits ist durch das Angreifen am Einzelwagen an verschiedenen Kontaktstellen auch möglich, dass sowohl die Eintaktvorrichtung als auch das Fördermittel gleichzeitig an einem Einzelwagen angreifen, ohne dass sich Bewegungsbahnen der entsprechenden Vorrichtungsteile kreuzen.

Alternativ können Eintaktvorrichtung und Fördermittel an mindestens einer gleichen Kontaktstelle am Einzelwagen angreifen.

Der Gravitationsförderer kann Einzelwagen mit seitlichen Kontaktorganen umfassen, wobei die Eintaktvorrichtung - bei einem auf die Eintaktvorrichtung wirkenden Impuls - an den Kontaktorganen angreift, indem die Eintaktvorrichtung zwischen Kontaktorgane von aufeinander folgenden Einzelwagen eingreift.

Als Kontaktorgane können beispielsweise Mitnehmernocken, Haken, Vorsprünge, Schlaufen oder andere Elemente am Einzelwagen ausgebildet und/oder befestigt sein. Die Kontaktorgane umfassen mögliche Kontaktstellen der Einzelwagen für die Eintaktvorrichtung und/oder das Fördermittel.

Die Eintaktvorrichtung oder Teile davon (beispielsweise das Entlassungsmittel, Arme des Entlassungsmittels oder elastische Kontaktzone) können mindestens zu einem gewissen Teil zwischen zwei Kontaktorgane von aufeinander folgenden Einzelwagen positioniert werden und dadurch zwischen die Kontaktorgane eingreifen.

Befindet sich ein Einzelwagen ausserhalb eines Takts des Fördermittels, kann der Einzelwagen durch sein Kontaktorgan auf die Eintaktvorrichtung auflaufen und dadurch über den Dämpfungsmechanismus der Eintaktvorrichtung seinen Impuls schonend abschwächen.

Alternativ kann die Eintaktvorrichtung auch am Einzelwagen angreifen, ohne dass Teile der Eintaktvorrichtung zwischen die Kontaktorgane von aufeinander folgenden Einzelwagen eingreifen.

Beispielsweise kann die Eintaktvorrichtung quer zur Bewegungsrichtung der Einzelwagen am Einzelwagen oder an Kontaktorganen desselben angreifen.

Die Einzelwagen können auch ohne Kontaktorgane ausgebildet sein.

Ein weiterer Aspekt der Erfindung umfasst einen Gravitationsförderer mit einer wie oben beschriebenen Eintaktvorrichtung, wobei das Entlassungsmittel einen Arm umfasst, welcher mindestens in einem Teilbereich elastisch ausgebildet ist. Vorteile und Alternativen sowie optionale weitere Merkmale des Entlassungsmittels sind bereits weiter oben in Zusammenhang mit der Eintaktvorrichtung beschrieben.

Ein weiterer Aspekt der Erfindung umfasst ein Verfahren zum Eintakten von Einzelwagen eines Gravitationsförderers in ein getaktet förderndes Fördermittel des Gravitationsförderers. Dieses Verfahren umfasst folgende Schritte:
- Einzelwagen ausserhalb eines gewünschten Takts des Fördermittels laufen kontaktschlüssig auf ein Entlassungsmittel auf, wobei beim Auflaufen der Einzelwagen ein Impuls der Einzelwagen schonend abgeschwächt wird,
- das Entlassungsmittel gibt in Zeitfenstern, welche dem gewünschten Takt des Fördermittels zugeordnet sind, Einzelwagen frei, wobei die Einzelwagen zwischen dem Auflaufen auf das Entlassungsmittel und der Freigabe durch das Entlassungsmittel ausschliesslich durch Gravitationskraft und/oder durch in Bewegungsrichtung der Einzelwagen nachfolgende Einzelwagen angetrieben sind,
- die vom Entlassungsmittel freigegebenen Einzelwagen bewegen sich vom Entlassungsmittel zum Fördermittel, dabei sind die Einzelwagen ausschliesslich durch Gravitationsenergie und/oder durch in Bewegungsrichtung der Einzelwagen nachfolgende Einzelwagen angetrieben.
Dabei wird das Entlassungsmittel durch das Fördermittel angetrieben.

Das Auflaufen der Einzelwagen kann insbesondere zu Staubildung von Einzelwagen vor dem Entlassungsmittel führen. Dies wird auch als Pufferbildung bezeichnet. Wie bereits weiter oben beschrieben, kann durch ein Auflaufen eines Einzelwagens auf einen Puffer oder einen Stau ein Impuls des auflaufenden Einzelwagens durch den Puffer oder Stau an den vordersten Einzelwagen in Bewegungsrichtung der Einzelwagen weitergegeben werden. Der vorderste Einzelwagen wirkt dann mit dem Entlassungsmittel zusammen und der Impuls wird durch den Dämpfungsmechanismus schonend abgeschwächt.

Das Entlassungsmittel hält die Einzelwagen in diesem Verfahren lediglich zurück. Durch ein Freigeben der Einzelwagen durch das Entlassungsmittel werden die Einzelwagen in das Fördermittel eingetaktet. Die eingetakteten Einzelwagen werden vom Entlassungsmittel nicht geschoben oder aktiv gefördert, sondern im Gegenteil wird deren Impuls bei Bedarf lediglich schonend abgeschwächt. Die zum Fördern und Bewegen der Einzelwagen benötigte Energie wird durch Gravitation zur Verfügung gestellt. Auf diese Weise kann ein energieeffizientes und/oder materialschonendes Eintakten erreicht werden, wobei darüber hinaus alle weiter oben beschriebenen Vorteile des schonenden Abschwächens sowie der anderen Merkmale hinzukommen.

Die Merkmale der Verfahrensansprüche sind sinngemäss mit den Vorrichtungsansprüchen kombinierbar und umgekehrt.

Im Folgenden wird der Erfindungsgegenstand anhand eines bevorzugten Ausführungsbeispiels, welches in den beiliegenden Zeichnungen dargestellt ist, näher erläutert. Es zeigen jeweils schematisch:
- Figur 1: Seitenansicht eines Ausschnitts eines Gravitationsförderers mit Eintaktvorrichtung, Einzelwagen und Fördermittel;
- Figur 2: Seitenansicht eines Entlassungsmittels der Eintaktvorrichtung aus Figur 1;
- Figur 3: Front- und Seitenansicht eines Arms des Entlassungsmittels aus Figur 2;
- Figur 4: perspektivische Ansicht eines Teils des Gravitationsförderers aus Figur 1;
- Figur 5: perspektivische Ansicht des Gravitationsförderers aus Figur 4 mit leicht verschobenem Blickpunkt;
- Figur 6: perspektivische Ansicht einer anderen Seite des Gravitationsförderers aus Figur 4;
- Figur 7: perspektivische Ansicht einer weiteren Ausführungsform eines Gravitationsförderers.

Grundsätzlich sind in den Figuren gleiche Teile mit gleichen Bezugszeichen versehen. Aus darstellungstechnischen Gründen sind in den Figuren in wenigen Fällen von der unten stehenden Beschreibung abweichende Details dargestellt. Es gilt dabei aber explizit der in der unten stehenden Beschreibung der Figuren beschriebene Sachverhalt. Sofern sich die in den Figuren dargestellten Sachverhalte also von der Beschreibung unterscheiden sollten, gelten die in den Figuren dargestellten Sachverhalte somit nicht.

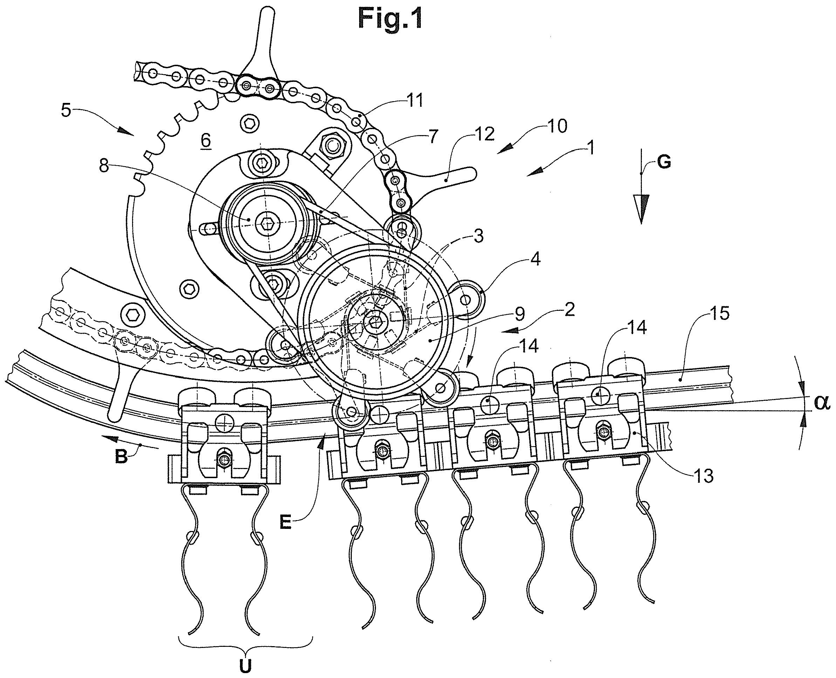

Beispielsweise sind in den Figuren 1 und 4 - 7 nicht alle Zähne von Zahnrädern dargestellt (z.B. von einem Fördermittelrad 6), obwohl die Zahnräder natürlich über ihren ganzen Umfang gezahnt sind. In den Figuren 1, 6 und 7 sind auch Mitnehmer 12 nicht korrekt entlang einer Kette 11 verteilt angeordnet dargestellt: wie in der unten stehenden Beschreibung beschrieben sind die Mitnehmer 12 in einem Abstand auf der Kette 11 angeordnet, welcher etwa einen Drittel des Aussenumfangs des Fördermittelrads 6 beträgt. Aus Gründen einer einfacheren Darstellung und besserer Sichtbarkeit entsprechend die Abstände der Mitnehmer 12 auf der Kette 11 in den Figuren 1, 6 und 7 nicht den effektiven Abständen gemäss Beschreibung.

In Figur 1 ist ein Ausschnitt eines Gravitationsförderers mit Eintaktvorrichtung 1, Einzelwagen 13 und Fördermittel 10 dargestellt. Figur 1 zeigt dabei eine Seitenansicht des Ausschnitts. Der Gravitationsförderer weist eine Schiene 15 auf, entlang welcher die Einzelwagen 13 gefördert werden. Die Schiene 15 weist zu einer Horizontalen (welche senkrecht zur Gravitationsrichtung G steht) einen Winkel α auf, welcher 5 Grad beträgt. Durch diese Neigung und die auf die Einzelwagen 13 einwirkende Gravitationskraft werden die Einzelwagen 13 angetrieben und durch eine Teilstrecke des Gravitationsförderers bewegt, in welcher sie mit der Eintaktvorrichtung 1 in Kontaktschluss treten können.

Die Einzelwagen 13 sind über Rollen mit der Schiene 15 kontaktschlüssig verbunden. Die Einzelwagen 13 sind über Rollen insbesondere stets mit der Schiene 15 kontaktschlüssig verbunden. Die Einzelwagen 13 sind im Gravitationsförderer hauptsächlich durch Gravitation angetrieben, werden aber auf bestimmten Teilstrecken auch durch ein Fördermittel 10 angetrieben. In diesen Teilstrecken ist das Fördermittel 10 derart ausgebildet und relativ zur Schiene 15 angeordnet, dass es die Einzelwagen 13 entlang der Schiene 15 antreiben kann. Hierzu weisen die Einzelwagen 13 Kontaktorgane 14 in Form von in Bewegungsrichtung B der Einzelwagen 13 seitlich befestigen Mitnehmernocken auf. Die Kontaktorgane 14 stehen von den Einzelwagen 13 also quer zur Bewegungsrichtung B der Einzelwagen 13 ab.

Das Fördermittel 10 umfasst eine Kette 11. Mitnehmer 12 sind in regelmässigen Abständen an Kettengliedern der Kette 11 befestigt. Die Mitnehmer 12 weisen eine stift- oder fingerartige Form auf und erstrecken sich in distaler Richtung von der Kette 11 weg. Die Mitnehmer 12 können durch Kontaktschluss mit den Kontaktorganen 14 die Einzelwagen 13 entlang der Schiene 15 in Bewegungsrichtung B der Einzelwagen 13 bewegen. Dies wird insbesondere dazu benutzt, die Einzelwagen 13 mindestens teilweise entgegen der Gravitation zu fördern. In Figur 1 bewegt das Fördermittel 10 die Einzelwagen 13 also in eine Richtung mit einer Komponente entgegen der Gravitationsrichtung G. Beispielsweise werden Einzelwagen 13 dadurch entgegen der Gravitationsrichtung G transportiert, um sie danach wieder durch Gravitation entlang dem Gravitationsförderer anzutreiben.

In Figur 1 sind vier Einzelwagen 13 dargestellt, wobei der in Bewegungsrichtung B der Einzelwagen 13 am weitesten stromabwärts liegende Einzelwagen 13 die Eintaktvorrichtung 1 bereits passiert hat. Dieser Einzelwagen 13 wurde bereits vom Entlassungsmittel 2 freigegeben und entlassen und kann sich durch Gravitation angetrieben entlang der Schiene 15 bewegen, bis er vom Mitnehmer 12 des Fördermittels 10 durch Kontaktschluss mit dem Kontaktorgan 14 weitergefördert wird. Die drei anderen Einzelwagen 13 in Figur 1 bilden einen Puffer und sind durch das Entlassungsmittel 2 gestaut, indem der in Bewegungsrichtung B der Einzelwagen 13 am weitesten stromabwärts liegende Einzelwagen 13 mit den elastischen Kontaktzonen 4 des Entlassungsmittels 2 in Kontaktschluss steht und die stromaufwärts liegenden Einzelwagen 13 darauf auflaufen bzw. aufgelaufen sind.

Eine räumliche Position, in welcher der letzte mögliche Kontaktschluss zwischen Einzelwagen 13 und Eintaktvorrichtung 1 beim Passieren der Eintaktvorrichtung 1 in Bewegungsrichtung B der Einzelwagen 13 des Gravitationsförderers erfolgen kann, wird als Entlassungsposition E bezeichnet und ist in Figur 1 eingezeichnet. Eine Übergabestelle U ist ebenfalls eingezeichnet, und diese bezeichnet eine räumliche Position der Einzelwagen 13, in welcher ein Einzelwagen 13 vom getaktet fördernden Fördermittel 10 übernommen werden kann. Die Übernahmestelle U liegt dabei in Bewegungsrichtung B der Einzelwagen 13 stromabwärts von der Entlassungsposition E und liegt in Gravitationsrichtung G betrachtet weiter unten. Somit können sich die Einzelwagen durch Gravitation angetrieben von der Entlassungsstelle E zur Übernahmestelle U bewegen.

Die Eintaktvorrichtung 1 taktet die Einzelwagen 13 in das Fördermittel 10 ein. Die Eintaktvorrichtung umfasst einen Antriebsmechanismus 5 und ein Entlassungsmittel 2. Der Antriebsmechanismus 5 weist ein Fördermittelrad 6, eine Übersetzung 8, einen Zahnriemen 7 und eine Antriebsscheibe 9 auf. Die Antriebsscheibe 9 verdeckt in Figur 1 einen Grossteil des dahinter liegenden Entlassungsmittels 2. Das Fördermittelrad 6 ist als Zahnrad ausgebildet, welches in die Kette 11 des Fördermittels 10 eingreift und dieses umlenkt. Die Kette 11 verläuft nach der Umlenkung durch das Fördermittelrad 6 in Bewegungsrichtung B der Einzelwagen 13 für eine Teilstrecke des Gravitationsförderers der Schiene 15 entlang. Entlang dieser Teilstrecke kann das Fördermittel 10 die Einzelwagen 13 bewegen bzw. fördern.

Das Fördermittelrad 6 dreht mit dem Fördermittel 10 mit und überträgt dessen Bewegung und Energie durch die Übersetzung 8 und den Zahnriemen 7 auf die Antriebsscheibe 9. Die Übersetzung 8 umfasst ein konzentrisch zum Fördermittelrad 6 angeordnetes und starr damit verbundenes Zahnriemenrad mit zum Fördermittelrad 6 unterschiedlichem Aussenumfang (wodurch ein Verhältnis der Übersetzung festgelegt ist). Der Zahnriemen 7 verbindet das Zahnriemenrad der Übersetzung 8 und die Antriebsscheibe 9 kraftschlüssig und überträgt dadurch die Bewegung und Energie des Fördermittels 10 auf die Antriebsscheibe 9. Die Antriebsscheibe 9 wiederum ist starr mit dem Entlassungsmittel 2 verbunden und überträgt dadurch die Bewegung und Energie des Fördermittels 10 an das Entlassungsmittel 2, welche somit starr miteinander verbunden sind.

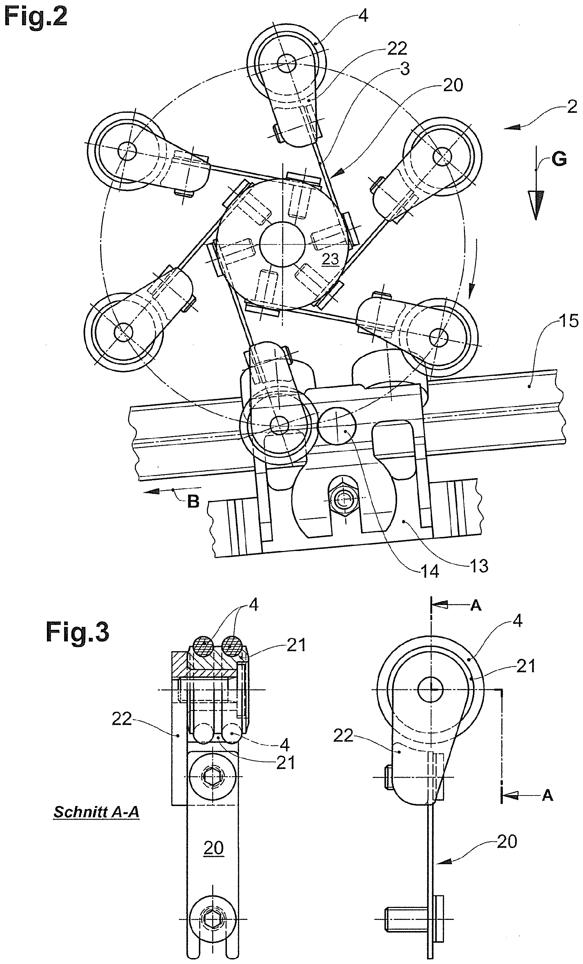

In Figur 2 ist das Entlassungsmittel 2 aus Figur 1 in Seitenansicht, separat von der Eintaktvorrichtung 1 und ohne Antriebsmechanismus 5 dargestellt. Die Eintaktvorrichtung 1 umfasst ein radförmiges Entlassungsmittel 2, welches hier sechs Arme 3 aufweist. Die Arme 3 sind dabei gleichmässig auf dem Umfang des radförmigen Entlassungsmittels 2 verteilt und weisen elastische Kontaktzonen 4 auf. Die elastischen Kontaktzonen 4 sind von Oberflächen von O-Ringen aus elastischem Kunststoff umfasst. Diese elastischen Kontaktzonen 4 können mit den Einzelwagen 13 respektive deren Kontaktorganen 14 in Kontaktschluss treten, indem die Arme 3 wie beispielsweise in Figur 1 dargestellt mindestens teilweise zwischen die Kontaktorgane 14 von zwei aufeinander folgenden Einzelwagen 13 eingreifen.

Die Arme 3 umfassen einen elastischen Bereich 20, welcher aus Federstahlblech besteht. An einem äusseren, bezüglich des Entlassungsmittels 2 distal gelegenen Ende des elastischen Bereichs 20 von Arm 3 ist eine Buchsenhalterung 22 befestigt. Die Buchsenhalterung 22 hält eine frei drehbar gelagerte Buchse 21. Auf einem

Aussenumfang der Buchse 21 sind zwei den Aussenumfang umlaufende Nuten ausgebildet, in welchen zwei O-Ringe aus elastischem Kunststoff angeordnet sind. Die O-Ringe weisen einen Innendurchmesser auf, welcher kleiner ist als der Aussenumfang der Buchse 21 innerhalb der umlaufenden Nuten, wodurch die O-Ringe leicht gedehnt und dadurch in der Nut und an der Buchse 21 befestigt sind. Sowohl der elastische Bereich 20 als auch die O-Ringe sind Bestandteil des am Arm 3 ausgebildeten Dämpfungsmechanismus, welcher auf die Eintaktvorrichtung 1 wirkenden Impuls der Einzelwagen 13 schonend abschwächt.

An einem inneren Ende des elastischen Bereichs 20, welches dem äusseren Ende gegenüberliegt, ist der Arm 3 durch Schrauben an einer Aussenseite eines scheibenförmigen Grundkörpers 23 des Entlassungsmittels 2 befestigt. Dabei erstrecken sich die Arme 3 im Wesentlichen in einer Richtung und tangential vom Grundkörper 23 weg. Die Arme 3 sind derart am Grundkörper 23 angeordnet, dass die äusseren Enden der Arme 3 sich bei einem von Einzelwagen 13 auf die Arme 3 wirkenden Impuls vom Grundkörper 23 entfernen. Der Grundkörper 23 ist starr und kraftschlüssig mit der Antriebsscheibe 9 (in Figur 2 nicht dargestellt) verbunden. Die O-Ringe bilden die elastischen Kontaktzonen 4 der Arme 3 aus und sind am äusseren, distalen Rand des Entlassungsmittels 2 angeordnet.

Figur 3 zeigt jeweils eine Front- und eine Seitenansicht eines Armes 3 des Entlassungsmittels 1 aus Figur 2. Die Frontansicht folgt dabei dem in der Seitenansicht eingezeichneten Schnitt A-A. Der elastische Bereich 20 ist aus Federstahlblech ausgebildet, und an dessen äusserem Ende ist eine Buchsenhalterung 22 befestigt. Ebenso ist die durch eine Schraube frei drehbar in der Buchsenhalterung 22 gelagerte Buchse 21 mit den umlaufenden Nuten und den darin befindlichen O-Ringen dargestellt. Diese O-Ringe bilden die elastischen Kontaktzonen 4 aus.

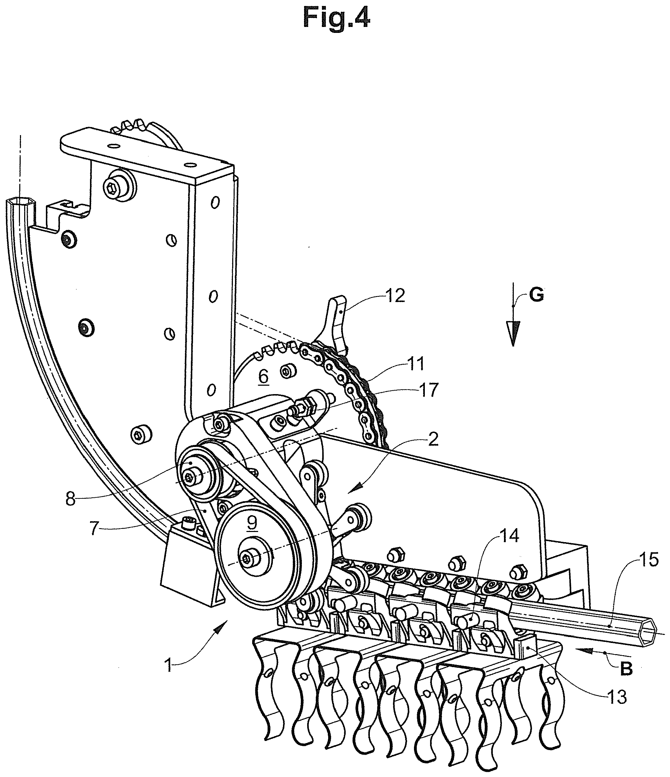

In Figur 4 ist eine perspektivische Ansicht eines Teils des Gravitationsförderers aus Figur 1 dargestellt. Dabei ist gut ersichtlich, dass das Entlassungsmittel 2 auf einer in Bewegungsrichtung B der Einzelwagen 13 betrachtet linken Seite der Einzelwagen 13 daran angreift (wobei die Gravitationsrichtung nach unten weist). Dieses Angreifen geschieht, indem die Arme 3 des Entlassungsmittels 2 zwischen Kontaktorgane 14 von zwei aufeinander folgenden Einzelwagen 13 eingreifen. Die Mitnehmer 12 des Fördermittels 10 hingegen greifen an den Einzelwagen 13 auf einer rechten Seite an, welche der linken Seite gegenüber liegt. Auch die Mitnehmer 12 greifen zwischen Kontaktorganen 14 von zwei aufeinander folgenden Einzelwagen 13 ein. Die Mitnehmer 12 greifen aber an anderen Kontaktorganen 14 der Einzelwagen 13 an als die Arme 3 der Eintaktvorrichtung 1. Dadurch kommen sich die Mitnehmer 12 und die Arme 3 der Eintaktvorrichtung 1 mechanisch nicht in die Quere.

Gut erkennbar in Figur 4 ist auch ein Sensor 17 für das Fördermittel 10. Der Sensor 17 ist als Induktionssensor ausgebildet und erfasst am Sensor 17 vorbeibewegte Schraubenköpfe, welche am Fördermittelrad 6 befestigt sind. Im vorliegenden Fall weist das Fördermittelrad 6 drei Schraubenköpfe auf, welche auf einer Umlaufbahn des Fördermittelrads 6 gleichmässig verteilt sind (um 120 Grad zueinander versetzt). Jeder Schraubenkopf ist dabei derart relativ zum Fördermittel 10 angeordnet, dass die Schraubenköpfe jeweils in einem Bereich zwischen den an der Kette 11 befestigten Mitnehmern 12 und einer Drehachse des Fördermittelrads 6 positioniert sind. Mit anderen Worten markieren die Schraubenköpfe am Fördermittelrad 6 die Mitnehmer 12, welche sich gerade am Fördermittelrad 6 befinden. Zudem sind die Mitnehmer 12 in einem Abstand auf der Kette 11 angeordnet, welcher etwa einem Drittel eines Aussenumfangs des Fördermittelrads 6 beträgt.

Der Sensor 17 für das Fördermittel 10 erfasst also induktiv, ob und mit welcher Geschwindigkeit sich das Fördermittelrad 6 dreht und folglich auch ob und mit welcher Geschwindigkeit sich das Fördermittel 10 bewegt. Der Sensor 17 für das Fördermittel 10 lässt durch eine entsprechende Anzahl und Anordnung der Schraubenköpfe auch einen Schluss zu, ob und mit welcher Geschwindigkeit sich Mitnehmer 12 bewegen und/oder wo sich Mitnehmer 12 befinden.

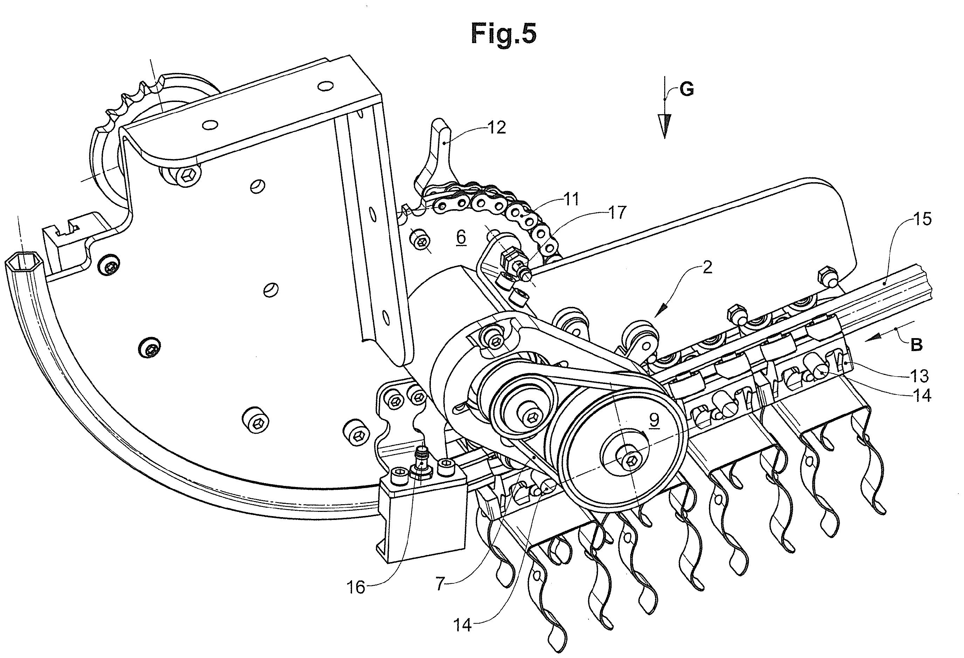

Auch Figur 5 zeigt eine perspektivische Ansicht des Gravitationsförderers aus Figur 4, allerdings mit aus leicht verschobenem Blickwinkel (aber immer noch von derselben Seite wie in Figur 4). Dadurch ist ein Sensor 16 für Einzelwagen 13 gut erkennbar. Auch der Sensor 16 für Einzelwagen 13 ist als Induktionssensor ausgebildet. Der Sensor 16 für Einzelwagen 13 ist in Bewegungsrichtung B der Einzelwagen 13 stromabwärts anschliessend an die Eintaktvorrichtung 1 positioniert und erfasst am Sensor 16 vorbeibewegte Kontaktorgane 14 von Einzelwagen 13 induktiv. Dadurch erfasst Sensor 16 also, ob ein Einzelwagen 13 die Eintaktvorrichtung 1 durchlaufen und verlassen hat. Der Sensor 16 für Einzelwagen 13 kann also die Einzelwagen 13 zählen, welche die Eintaktvorrichtung 1 passiert haben.

Durch eine Kombination der Informationen vom Sensor 17 für das Fördermittel 10 und der Informationen vom Sensor 16 für Einzelwagen 13 kann also eindeutig darauf geschlossen werden, ob ein Mitnehmer 12 einen oder mehrere Einzelwagen 13 mitnimmt bzw. ob einem Takt, welchem ein Mitnehmer 12 zugeordnet ist, ein oder mehrere Einzelwagen 13 zugeordnet sind.

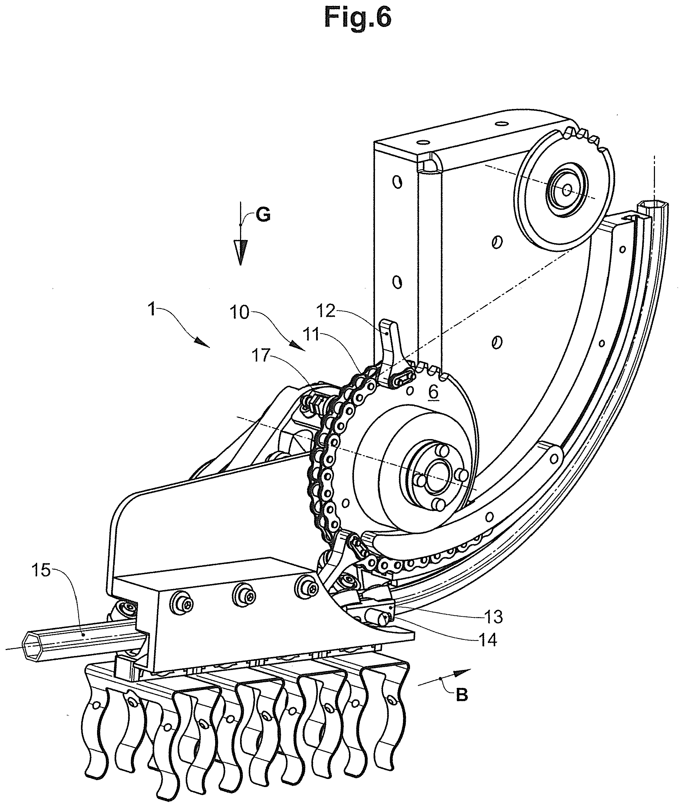

Figur 6 zeigt eine perspektivische Ansicht einer anderen Seite des Gravitationsförderers aus Figur 4. Auf dieser Seite greifen die Mitnehmer 12 des Fördermittels 10 zwischen die Kontaktorgane 14 der Einzelwagen 13 ein, um sie entlang der Schiene 15 weiterzubewegen. Die Kette 11 ist in Bewegungsrichtung B der Einzelwagen 13 stromabwärts des Fördermittelrads 6 von einer Kulisse derart geführt, dass das Fördermittel 10 entlang der Schiene 15 verläuft und dadurch die Einzelwagen 13 fördern kann.

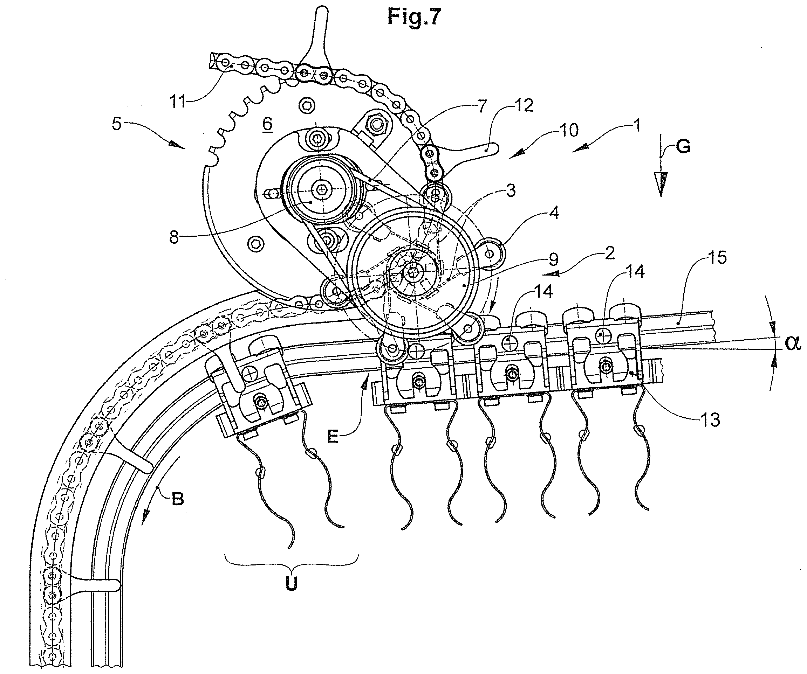

In Figur 7 ist ein Ausschnitt eines Gravitationsförderers dargestellt, welcher analog zu dem Gravitationsförderer in Figuren 1 sowie 4 bis 6 mit der Eintaktvorrichtung 1, den Einzelwagen 13 und dem Fördermittel 10 ausgebildet ist. Im Gegensatz dazu fördert das Fördermittel 10 aber (in Bewegungsrichtung der Einzelwagen B stromabwärts der Eintaktvorrichtung 1) die Einzelwagen 13 mindestens teilweise in Gravitationsrichtung. In Figur 7 bewegt das Fördermittel 10 die Einzelwagen 13 also in eine Richtung mit einer Komponente in Gravitationsrichtung G. Dies bewirkt, dass die Einzelwagen 13 auf den Mitnehmern 12 der Kette 11 aufliegen und durch die Mitnehmer 12 gebremst und getaktet werden.

## Patentansprüche

1. Gravitationsförderer umfassend ein Fördermittel (10) und eine Eintaktvorrichtung (1) zu einer Übergabe von Einzelwagen (13) eines Gravitationsförderers an das getaktet fördernde Fördermittel (10) des Gravitationsförderers, wobei die Eintaktvorrichtung (1) derart ausgebildet ist, dass die Einzelwagen (13) einem Takt des Fördermittels (10) zugeordnet werden können, und die Eintaktvorrichtung (1) einen Antriebsmechanismus (5) aufweist, **dadurch gekennzeichnet, dass** die Eintaktvorrichtung (1) einen Dämpfungsmechanismus aufweist, welcher einen auf die Eintaktvorrichtung (1) wirkenden Impuls eines Einzelwagens (13) schonend abschwächt, und der Antriebsmechanismus (5) durch das Fördermittel (10) angetrieben ist.

2. Gravitationsförderer gemäss Anspruch 1, **dadurch gekennzeichnet, dass** die Eintaktvorrichtung (1) ein Entlassungsmittel (2) aufweist, welches durch Kontaktschluss mit den Einzelwagen (13) die Einzelwagen (13) in das Fördermittel (10) eintaktet, wobei der Dämpfungsmechanismus am Entlassungsmittel (2) ausgebildet ist.

3. Gravitationsförderer gemäss einem der Ansprüche 1 bis 2, **dadurch gekennzeichnet, dass** der Dämpfungsmechanismus eine elastische Kontaktzone (4) für einen Kontaktschluss mit den Einzelwagen (13) umfasst.

4. Gravitationsförderer gemäss einem der Ansprüche 2 bis 3, **dadurch gekennzeichnet, dass** die Eintaktvorrichtung (1) eine Achse aufweist, um welche das Entlassungsmittel (2) drehbar gelagert ist, wobei die Achse insbesondere durch einen Massenmittelpunkt des Entlassungsmittels (2) verlaufend angeordnet ist.

5. Gravitationsförderer gemäss einem der Ansprüche 1 bis 4, **dadurch gekennzeichnet, dass** die Eintaktvorrichtung (1) ein Vereinzelungsmittel umfasst, welches eine Vereinzelung der Einzelwagen (13) beim Eintakten in das Fördermittel (10) bewirkt.

6. Gravitationsförderer gemäss Anspruch 5, **dadurch gekennzeichnet, dass** das Vereinzelungsmittel das Entlassungsmittel (2) umfasst.

7. Gravitationsförderer gemäss einem der Ansprüche 2 bis 6, **dadurch gekennzeichnet, dass** das Entlassungsmittel (2) mindestens einen Arm (3) umfasst, und der Dämpfungsmechanismus durch einen elastisch verformbaren Bereich am Entlassungsmittel (2) ausgebildet wird, dessen elastische Verformung eine Auslenkung des mindestens einen Armes (3) bewirkt.

8. Gravitationsförderer gemäss Anspruch 7, **dadurch gekennzeichnet, dass** der Arm (3) mindestens in einem Teilbereich (20) elastisch ausgebildet ist.

9. Gravitationsförderer gemäss einem der Ansprüche 7 oder 8, **dadurch gekennzeichnet, dass** das Entlassungsmittel (2) einen Grundkörper (23) enthält, an welchem wenigstens ein Arm (3) angeordnet ist und der Dämpfungsmechanismus durch wenigstens einen elastisch verformbaren Bereich am Grundkörper (23) ausgebildet wird und/oder der Grundkörper (23) elastisch gelagert ist.

10. Gravitationsförderer gemäss einem der Ansprüche 1 bis 9, **dadurch gekennzeichnet, dass** der Antriebsmechanismus (5) das Entlassungsmittel (2) starr an das Fördermittel (10) koppelt.

11. Gravitationsförderer gemäss einem der Ansprüche 1 bis 10, **dadurch gekennzeichnet, dass** die Eintaktvorrichtung (1) derart ausgebildet und positioniert, dass eine Entlassungsposition (E) relativ zur Gravitationsrichtung (G) oberhalb der Übergabestelle (U) an das Fördermittel (10) angeordnet ist, wobei die Entlassungsposition (E) eine räumliche Position der Einzelwagen bezeichnet, in welcher der letzte mögliche Kontaktschluss zwischen Einzelwagen (13) und Eintaktvorrichtung (1) beim Passieren der Eintaktvorrichtung (1) in Bewegungsrichtung der Einzelwagen (13) erfolgen kann.

12. Gravitationsförderer gemäss einem der Ansprüche 1 bis 11, wobei das Fördermittel (10) eine Kette (11) mit Mitnehmern (12) umfasst.

13. Gravitationsförderer gemäss einem der Ansprüche 1 bis 12, **dadurch gekennzeichnet, dass** der Gravitationsförderer einen Sensor (16) für Einzelwagen (13) und einen Sensor (17) für das Fördermittel (10) umfasst, wobei die Sensoren fähig sind eine Fördermenge des Fördermittels und/oder des Gravitationsförderers zu erfassen.

14. Gravitationsförderer gemäss einem der Ansprüche 1 bis 13, wobei die Eintaktvorrichtung (1) - bei einem auf die Eintaktvorrichtung (1) wirkenden Impuls - an einem Einzelwagen (13) des Gravitationsförderers an einer ersten Kontaktstelle des Einzelwagens (13) angreift, und das Fördermittel (10) an einer zweiten von der ersten verschiedenen Kontaktstelle des Einzelwagens (13) angreift.

15. Gravitationsförderer gemäss einem der Ansprüche 1 bis 14, **dadurch gekennzeichnet, dass** der Gravitationsförderer Einzelwagen (13) mit seitlichen Kontaktorganen (14) umfasst, wobei die Eintaktvorrichtung (1) - bei einem auf die Eintaktvorrichtung (1) wirkenden Impuls - an den Kontaktorganen (14) angreift, indem die Eintaktvorrichtung (1) zwischen Kontaktorgane (14) von aufeinander folgenden Einzelwagen (13) eingreift.

16. Verfahren zum Eintakten von Einzelwagen (13) eines Gravitationsförderers in ein getaktet förderndes Fördermittel (10) des Gravitationsförderers, umfassend folgende Schritte:
- Einzelwagen (13) ausserhalb eines gewünschten Takts des Fördermittels (10) laufen kontaktschlüssig auf ein Entlassungsmittel (2) auf,
- das Entlassungsmittel (2) gibt in Zeitfenstern, welche dem gewünschten Takt des Fördermittels (10) zugeordnet sind, Einzelwagen (13) frei, wobei die Einzelwagen (13) zwischen dem Auflaufen auf das Entlassungsmittel (2) und der Freigabe durch das Entlassungsmittel (2) ausschliesslich durch Gravitationskraft und/oder durch in Bewegungsrichtung (B) der Einzelwagen (13) nachfolgende Einzelwagen (13) angetrieben sind,
- die vom Entlassungsmittel (2) freigegebenen Einzelwagen (13) bewegen sich vom Entlassungsmittel (2) zum Fördermittel (10), dabei sind die Einzelwagen (13) ausschliesslich durch Gravitationsenergie und/oder durch in Bewegungsrichtung (B) der Einzelwagen (13) nachfolgende Einzelwagen (13) angetrieben, **dadurch gekennzeichnet, dass**
- beim Auflaufen der Einzelwagen (13) auf das Entlassungsmittel (2) ein Impuls der Einzelwagen (13) schonend abgeschwächt wird, und das Entlassungsmittel (2) durch das Fördermittel (10) angetrieben wird.

## Claims

1. A gravity conveyor comprising a conveying means (10) and a pacing device (1) for a transfer of individual vehicles (13) of a gravity conveyor onto the conveying means (10) of the gravity conveyor which conveys in a paced manner, wherein the pacing device (1) is designed in a manner such that the individual vehicles (13) can be assigned to a pace of the conveying means (10), and wherein the pacing device (1) comprises a drive mechanism (5), **characterised in that** the pacing device (1) comprises a damping mechanism which gently weakens an impulse of an individual vehicle (13) which acts upon the pacing device (1), and the drive mechanism (5) is driven by the conveying means (10).

2. A gravity conveyor according to claim 1, **characterised in that** the pacing device (1) comprises release means (2) which, by way of a contact fit with the individual vehicles (13), paces the individual vehicles (13) into the conveying means (10), wherein the damping mechanism is formed on the release means (2).

3. A gravity conveyor according to one of the claims 1 to 2, **characterised in that** the damping mechanism comprises an elastic contact zone (4) for a contact fit with the individual vehicles (13).

4. A gravity conveyor according to one of the claims 2 to 3, **characterised in that** the pacing device (1) comprises a pivot, about which the release means (2) is rotatably mounted, wherein the pivot in particular is arranged running through a mass centre point of the release means (2).

5. A gravity conveyor according to one of the claims 1 to 4, **characterised in that** the pacing device (1) comprises singularising means which effects a singularisation of the individual vehicles (13) on pacing into the conveying means (10).

6. A gravity conveyor according to claim 5, **characterised in that** the singularising means comprises the release means (2).

7. A gravity conveyor according to one of the claims 2 to 6, **characterised in that** the release means (2) comprises at least one arm (3), and the damping mechanism is formed by an elastically deformable zone on the release means (2) whose elastic deformation effects a deflection of the at least one arm (3).

8. A gravity conveyor according to claim 7, **characterised in that** the arm (3) is designed elastically at least in a part-region (20).

9. A gravity conveyor according to one of the claims 7 or 8, **characterised in that** the release means (2) comprises a base body (23), at least one arm (3) is arranged on the base body (23), and the damping mechanism is designed by at least one elastically deformable zone on the base body (23) and/or the base body (23) is mounted elastically.

10. A gravity conveyor according to one of the claims 1 to 9, **characterised in that** the drive mechanism (5) rigidly couples the release means (2) onto the conveying means (10).

11. A gravity conveyor according to one of the claims 1 to 10, **characterised in that** the pacing device (1) is designed in a manner and positioned such that a release position (E) relative to the gravitational direction (G) is arranged above the transfer location (U) to the conveying means (10), wherein the release position (E) indicates a spatial position of the individual vehicles, in which the last possible contact fit between the individual vehicles (13) and the pacing device (1) can be effected on passing the pacing device (1) in the movement direction of the individual vehicles (13).

12. A gravity conveyor according to one of the claims 1 to 11, wherein the conveying means (10) comprises a chain (11) with drivers (12).

13. A gravity conveyor according to one of the claims 1 to 12, **characterised in that** the gravity conveyor comprises a sensor (16) for individual vehicles (13), and a sensor (17) for the conveying means (10), whereas the sensors are capable of detecting a conveyed quantity of the conveying means and/or of the gravity conveyor.

14. A gravity conveyor according to one of the claims 1 to 13, wherein the pacing device (1) - given an impulse acting upon the pacing device (1) - engages on a individual vehicle (13) of the gravity conveyor at a first contact location of the individual vehicle (13), and the conveying means (10) engages on a second contact location of the individual vehicle (13) which is different from the first contact location.

15. A gravity conveyor according to one of the claims 1 to 14, **characterised in that** the gravity conveyor comprises individual vehicles (13) with lateral contact members (14), wherein the pacing device (1) - given an impulse acting upon the pacing device (1) - engages on the contact members (14) by way of the pacing device (1) engaging between contact members (14) of consecutive individual vehicles (13).

16. A method for pacing individual vehicles (13) of a gravity conveyor into a conveying means (10) of the gravity conveyor which conveys in a paced manner, comprising the following steps:
- individual vehicles (13) outside a desired pace of the conveying means (10) run with a contact fit onto a release means (2),
- the release means (2) releases individual vehicles (13) in time windows, which are assigned to the desired pace of the conveying means (10), wherein the individual vehicles (13) between the running onto the release means (2) and the release by the release means (2) are driven exclusively by gravitational force and/or by individual vehicles (13) which are subsequent in the movement direction (B) of the individual vehicles (13),
- the individual vehicles (13) which are released by the release means (2) move from the release means (2) to the conveying means (10), and thereby the individual vehicles (13) are driven exclusively by gravitational energy and/or by individual vehicles (13) which are subsequent in the movement direction (B) of the individual vehicles (13), **characterised in that**
- with the running-on of the individual vehicles (13), an impulse of the individual vehicle (13) is gently weakened, and the release means (2) is driven by the conveying means (10).

## Revendications

1. Convoyeur à gravité comprenant un moyen de convoyage (10) et un dispositif d'introduction cyclique (1) destiné à un transfert de chariots individuels (13) d'un convoyeur à gravité au moyen de convoyage (10) à convoyage cyclique du convoyeur à gravité, le dispositif d'introduction cyclique (1) étant configuré de telle sorte que les chariots individuels (13) peuvent être associés à un cycle du moyen de convoyage (10), et le dispositif d'introduction cyclique (1) possède un mécanisme d'entraînement (5), **caractérisé en ce que** le dispositif d'introduction cyclique (1) possède un mécanisme d'amortissement qui atténue avec ménagement une impulsion d'un chariot individuel (13) qui agit sur le dispositif d'introduction cyclique (1) et le mécanisme d'entraînement (5) est entraîné par le moyen de convoyage (10).

2. Convoyeur à gravité selon la revendication 1, **caractérisé en ce que** le dispositif d'introduction cyclique (1) possède un moyen de libération (2) qui, par liaison par contact avec les chariots individuels (13), introduit cycliquement les chariots individuels (13) dans le moyen de convoyage (10), le mécanisme d'amortissement étant formé sur le moyen de libération (2).

3. Convoyeur à gravité selon l'une des revendications 1 à 2, **caractérisé en ce que** le mécanisme d'amortissement comprend une zone de contact élastique (4) pour une liaison par contact avec les chariots individuels (13).

4. Convoyeur à gravité selon l'une des revendications 2 à 3, **caractérisé en ce que** le dispositif d'introduction cyclique (1) possède un axe autour duquel le moyen de libération (2) est monté à rotation, l'axe étant en particulier disposé de manière à passer par un centre de gravité du moyen de libération (2).

5. Convoyeur à gravité selon l'une des revendications 1 à 4, **caractérisé en ce que** le dispositif d'introduction cyclique (1) comprend un moyen de département qui provoque le département des chariots individuels (13) lors de l'introduction cyclique dans le moyen de convoyage (10).

6. Convoyeur à gravité selon la revendication 5, **caractérisé en ce que** le moyen de département comprend le moyen de libération (2).

7. Convoyeur à gravité selon l'une des revendications 2 à 6, **caractérisé en ce que** le moyen de libération (2) comprend au moins un bras (3) et le mécanisme d'amortissement est formé par une zone déformable par effet élastique au niveau du moyen de libération (2), dont la déformation élastique provoque une déviation de l'au moins un bras (3).

8. Convoyeur à gravité selon la revendication 7, **caractérisé en ce que** le bras (3) est de configuration élastique au moins dans une zone partielle (20).

9. Convoyeur à gravité selon l'une des revendications 7 ou 8, **caractérisé en ce que** le moyen de libération (2) contient un corps de base (23) sur lequel est disposé au moins un bras (3) et le mécanisme d'amortissement est formé sur le corps de base (23) par au moins une zone déformable par effet élastique et/ou le corps de base (23) est supporté avec élasticité.

10. Convoyeur à gravité selon l'une des revendications 1 à 9, **caractérisé en ce que** le mécanisme d'entraînement (5) réalise un accouplement rigide du moyen de libération (2) au moyen de convoyage (10).

11. Convoyeur à gravité selon l'une des revendications 1 à 10, **caractérisé en ce que** le dispositif d'introduction cyclique (1) est configuré et positionné de telle sorte qu'une position de libération (E) est disposée sur le moyen de convoyage (10) au-dessus du point de transfert (U) par rapport au sens de la gravité (G), la position de libération (E) désignant une position dans l'espace des chariots individuels dans laquelle peut avoir lieu la dernière liaison par contact possible entre les chariots individuels (13) et le dispositif d'introduction cyclique (1) lors du passage par le dispositif d'introduction cyclique (1) dans le sens du déplacement des chariots individuels (13).

12. Convoyeur à gravité selon l'une des revendications 1 à 11, le moyen de convoyage (10) comprenant une chaîne (11) avec des tenons d'entraînement (12).

13. Convoyeur à gravité selon l'une des revendications 1 à 12, **caractérisé en ce que** le convoyeur à gravité comprend un capteur (16) pour les chariots individuels (13) et un capteur (17) pour le moyen de convoyage (10), les capteurs étant aptes à détecter une quantité transportée du moyen de convoyage et/ou du convoyeur à gravité.

14. Convoyeur à gravité selon l'une des revendications 1 à 13, le dispositif d'introduction cyclique (1), en présence d'une impulsion qui agit sur le dispositif d'introduction cyclique (1), saisit un chariot individuel (13) du convoyeur à gravité en un premier point de contact du chariot individuel (13), et le moyen de convoyage (10) saisit en un deuxième point de contact du chariot individuel (13), différent du premier point de contact.

15. Convoyeur à gravité selon l'une des revendications 1 à 14, **caractérisé en ce que** le convoyeur à gravité comprend des chariots individuels (13) munis d'organes de contact (14) latéraux, le dispositif d'introduction cyclique (1), en présence d'une impulsion qui agit sur le dispositif d'introduction cyclique (1), saisissant au niveau des organes de contact (14) **en ce que** le dispositif d'introduction cyclique (1) vient en prise entre les organes de contact (14) des chariots individuels (13) successifs.

16. Procédé d'introduction cyclique de chariots individuels (13) d'un convoyeur à gravité dans un moyen de convoyage (10) à convoyage cyclique du convoyeur à gravité, comprenant les étapes suivantes :
- en-dehors d'un cycle souhaité du moyen de convoyage (10), les chariots individuels (13) montent avec liaison par contact sur un moyen de libération (2),
- le moyen de libération (2) libère des chariots individuels (13) dans des créneaux temporels qui sont associés au cycle souhaité du moyen de convoyage (10), les chariots individuels (13), entre la montée sur le moyen de libération (2) et la libération par le moyen de libération (2), étant exclusivement entraînés par la force de gravité et/ou par les chariots individuels (13) suivants dans le sens du déplacement (B) des chariots individuels (13),
- les chariots individuels (13) libérés par le moyen de libération (2) se déplacent du moyen de libération (2) vers le moyen de convoyage (10), les chariots individuels (13) étant ici exclusivement entraînés par la force de gravité et/ou par les chariots individuels (13) suivants dans le sens du déplacement (B) des chariots individuels (13),
**caractérisé en ce que**
- lors de la montée des chariots individuels (13) sur le moyen de libération (2), une impulsion des chariots individuels (13) est atténuée avec ménagement et le moyen de libération (2) est entraîné par le moyen de convoyage (10).
